# EUROPÄISCHE PATENTSCHRIFT

(11) **EP 1 002 829 B1**
(45) Veröffentlichungstag und Bekanntmachung des Hinweises auf die Patenterteilung: **01.03.2006**
(21) Anmeldenummer: 99121808.2
(22) Anmeldetag: 04.11.1999
(51) Int. Cl.: C08J 9/00, C08J 9/16, C08L 25/06

(54) **Gefüllte schäumbare Polystyrol-Partikel**
Filled expandable styrenic particles
Particules styréniques expansibles contenant une charge

(30) Priorität: 16.11.1998 DE 19852683
(43) Veröffentlichungstag der Anmeldung: 24.05.2000
(73) Patentinhaber: BASF Aktiengesellschaft, 67056 Ludwigshafen (DE)
(72) Erfinder: Glück, Guiscard, Dr., 55129 Mainz (DE); Hahn, Klaus, Dr., 67281 Kirchheim (DE); Dietzen, Franz-Josef, Dr., 67071 Ludwigshafen (DE); Ehrmann, Gerd, Dr., 67146 Deidesheim (DE)

(56) Entgegenhaltungen:
- DE-A- 3 814 783
- US-A- 3 474 048
- PATENT ABSTRACTS OF JAPAN vol. 005, no. 053 (M-063), 14. April 1981 (1981-04-14) & JP 56 010432 A (ACHILLES CORP), 2. Februar 1981 (1981-02-02)

## Beschreibung

Die Erfindung betrifft teilchenförmige, expandierbare Styrolpolymerisate (EPS-Partikel), sowie daraus durch Verschäumen herstellbare offenzellige Polystyrol-Partikelschaumstoffe.

Offenzellige Schaumstoffe zeichnen sich gegenüber geschlossenzelligen Schaumstoffen durch eine bessere Schallisolierung und erhöhte Flüssigkeitsaufnahme aus, was in manchen Anwendungsfällen von Vorteil sein kann. Offenzellige Polystyrol-Partikelschaumstoffe sind bisher noch nicht bekannt geworden. Da aber zu erwarten ist, daß sie weitere vorteilhafte Eigenschaften, z.B. gute Wärmeisolierung aufweisen, besteht ein Bedürfnis nach derartigen Schaumstoffen.

Die Patentanmeldung WO 96/34039 beschreibt offenzellige, mikrozelluläre Polystyrolschaumstoffe mit einer mittleren Zellgröße von 70 µm oder weniger. Es handelt sich dabei nicht um Partikelschaumstoffe, sondern um direkt durch Schaumextrusion hergestellte Schaumstoffe. In den Beispielen sind zahlreiche Schaumstoffe beschrieben, dabei ist die niedrigste Dichte 29,12 g/l, die höchste Zellgröße 68 µm, und der niedrigste Offenzelligkeitsgrad beträgt 84,1 %. Die Schaumstoffe werden durch Extrusion von Polystyrol und Treibmitteln in Gegenwart von feinteiligen Ruß-oder Graphitpartikeln hergestellt. Letztere wirken als Keimbildner und sind verantwortlich für die geringe Zellgröße. Die Offenzelligkeit der Schaumstoffe rührt her vom Aufplatzen der feinen Zellen beim Auspressen der Polymerschmelze aus der Extruderdüse. Die offenzelligen, mikrozellulären Schaumstoffe nach WO 96/34 039 sollen, insbesondere wenn sie evakuiert sind, eine geringe Wärmeleitfähigkeit aufweisen, andere vorteilhafte Eigenschaften sind nicht beschrieben.

In den Patentanmeldungen PCT/EP 97/02457 und PCT/EP 97/02458 wird vorgeschlagen, Graphitpartikel in teilchenförmige, expandierbare Styrolpolymerisate einzuarbeiten, wodurch die Wärmeleitfähigkeit von daraus hergestellten Schaumstoffen herabgesetzt werden kann. Die dabei eingesetzten Graphitpartikel weisen eine Partikelgröße von vorzugsweise 1 bis 50 µm auf; derartige EPS-Partikel ergeben aber beim Verschäumen und Versintern keine offenzelligen Schaumstoffe mit einem Offenzelligkeitsgrad von mehr als 5 %.

Die DE-A-3 814 783 lehrt Polystyrol - Partikelschaumstoffe, die wollastonit als Füllstoff enthalten

Gegenstand der Erfindung sind offenzellige Polystyrol-Partikelschaumstoffe, die als Polymermatrix insbesondere Homopolystyrol oder Styrolcopolymerisate mit bis zu 20 Gew.-%, bezogen auf das Gewicht der Polymeren, an ethylenisch ungesättigten Comonomeren, insbesondere Alkylstyrole, Divinylbenzol, Acrylnitril oder α-Methylstyrol enthalten, mit einer Dichte von 5 bis 50 g/l, vorzugsweise 10 bis 25 g/1, einer mittleren Zellgröße von 50 bis 1.000 µm, vorzugsweise 75 bis 750, besonders bevorzugt 80 bis 500 µm und insbesondere 100 bis 500 µm und einem Offenzelligkeitsgrad von 5 bis 100 %, vorzugsweise 10 bis 95 % und insbesondere 20 bis weniger als 70 %, erhältlich durch Verschäumen und Versintern von teilchenförmigen, treibmittelhaltigen Styrolpolymerisaten (EPS-Partikel), die 1 bis 25 Gew.-%, vorzugsweise 2 bis 20 Gew.-% und insbesondere 3 bis 10 Gew.-% eines Feststoffs enthalten, der in Wasser und in Kohlenwasserstoffen mit 4 bis 10 Kohlenstoffatomen unlöslich ist und eine mittlere Teilchengröße von mehr als 50 µm bis 200 µm that.

Die Feststoffe sollen unlöslich sein, d.h., sie dürfen bei der bevorzugten Herstellung der EPS-Partikel durch Polymerisation von Styrol in wässriger Suspension in Gegenwart von Pentan nicht in Wasser, Styrol oder Pentan sich lösen oder darin anquellen. Die mittlere Teilchengröße wird mittels Fraunhofer-Beugung ermittelt; unter Teilchengröße der längste Teilchendurchmesser. Die mittlere Teilchengröße soll mehr als 50 µm bis 200 µm vorzugsweise 60 bis 200 µm und insbesondere 80 bis 160 µm betragen.

Bevorzugte Feststoffe sind Graphitpartikel und hydrophobierte Glasfasern, daneben sind auch hydrophobierte Silikate, Metallpigmente und Metalloxide geeignet, ferner Kunststoffharze, die vorzugsweise aus vernetzten Polymeren bestehen.

Bevorzugt werden die EPS-Partikel hergestellt durch Polymerisation von Styrol, gegebenenfalls zusammen mit bis zu 20 % seines Gewichts an Comonomeren, in wässriger Suspension in Gegenwart des Feststoffs und unter Zusatz von Treibmitteln vor, während oder nach der Polymerisation.

Bei dieser Suspensionspolymerisation können die üblichen Hilfsmittel, wie z.B. Peroxid-Initiatoren, Suspensionsstabilisatoren, Treibmittel, Kettenüberträger, Expandierhilfsmittel, Keimbildner und Weichmacher zugesetzt werden. Besonders bevorzugt ist der Zusatz von Flammschutzmitteln, vorzugsweise in Mengen von 0,1 bis 6 Gew.-% und von Flammschutzsynergisten in Mengen von 0,1 bis 1 Gew.-%, jeweils bezogen auf das resultierende Styrolpolymerisat. Bevorzugte Flammschutzmittel sind aliphatische, cycloaliphatische und aromatische Bromverbindungen, wie Hexabromcyclododecan, Pentabrommonochlorcyclohexan und Pentabromphenylallylether. Geeignete Synergisten sind C-C- oder O-O-labile organische Verbindungen, wie Dicumyl und Dicumylperoxid. Treibmittel werden in Mengen von 3 bis 10 Gew.-%, bezogen auf Styrolpolymerisat zugesetzt. Man kann sie vor, während oder nach der Polymerisation der Suspension zusetzen. Geeignete Treibmittel sind aliphatische Kohlenwasserstoffe mit 4 bis 6 Kohlenstoffatome. Es ist vorteilhaft, als Suspensionsstabilisatoren anorganische Pickering-Dispergatoren, z.B. Magnesiumpyrophosphat oder Calciumphosphat einzusetzen.

Die im Verlauf der Suspensionspolymerisation zugesetzten Feststoffpartikel werden vorher zweckmäßigerweise in einem organischen Lösungsmittel, bevorzugt in Styrol suspendiert. Besonders günstig ist es, als Suspensionsmittel eine Lösung von Polystyrol in Styrol einzusetzen. Möglich ist auch die Zudosierung von Graphit als Polystyrolbatch. Das Gewichtsverhältnis Feststoff zu Suspensionsmittel beträgt dabei vorzugsweise 80 : 20 bis 20 : 80, insbesondere etwa 50 : 50.

Die Feststoffsuspension wird dem Polymerisationsansatz bei einem Monomerenumsatz zwischen 10 und 100 %, vorzugsweise zwischen 20 und 90 % und insbesondere zwischen 25 und 75 % zugesetzt.

Grundsätzlich kann man die erfindungsgemäßen EPS-Partikel auch dadurch herstellen, daß man die Feststoffpartikel in einem Extruder in eine Schmelze von Polystyrol und Treibmittel einarbeitet und den ausgepreßten Strang granuliert. Ein Aufschäumen erfolgt dabei nicht.

Die expandierbaren, Feststoffpartikel enthaltenden Styrolpolymerisate können zu offenzelligen Polystyrolschaumstoffen verarbeitet werden.

Hierzu werden die expandierbaren Partikel vorgeschäumt. Dies geschieht zumeist durch Erwärmen der Partikel mit Wasserdampf in sogenannten Vorschäumern. Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

Es wird angenommen, daß beim Verschäumen der EPS-Partikel die sich bildenden Zellmembranen durch die relativ großen Feststoffpartikel zerstört werden, so daß offene Zellen entstehen.

Die offenzelligen Polystyrolpartikelschaumstoffe liegen - im Gegensatz zu den mikrozellulären Schaumstoffen nach WO 96/34 039 - im allgemeinen nicht in evakuierter Form vor.

Die Zellgröße wird durch Ausmessen und Auszählen der Zelldurchmesser an Mikrotom-Schnitten der Schaumstoffe gemessen; der Offenzelligkeitsgrad wird nach ASTM D 2856-87, Verfahren C mit einem Accupyc 1330-Gerät bestimmt.

Die erfindungsgemäßen Schaumstoffe zeichnen sich außer durch eine hervorragende Wärmeisolierung auch durch günstige Schallisolierungseigenschaften und durch eine geringe Schwindung aus. Letzteres ist wichtig bei der Herstellung von größeren Formteilen, z.B. bei Schaumstoffblöcken, die nach der Entnahme aus dem Formteilautomaten oft zur Bildung von Einfallstellen neigen und auch noch nach Tagen schwinden. Aufgrund ihrer Offenzelligkeit können sie Flüssigkeiten aufnehmen und sind daher als Dränageplatten geeignet und können z.B. zum Absorbieren von Ö1 bei Tankerunfällen verwendet werden.

### Beispiel 1

In 18,4 kg Styrol werden 61,0 g Dicumylperoxid, 40,0 g Dicumyl, 15 g Hexabromcyclododecan und 20,2 g Dibenzoylperoxid gelöst. Die organische Phase wird in 20,0 1 vollentsalztes Wasser in einem 50 l Rührkessel eingebracht. Die wäßrige Phase enthält 35,0 g Natriumpyrophosphat und 70,0 g Magnesiumsulfat (Bittersalz). Man erhitzt die Suspension auf 80°C. Nach 110 Minuten bei einem Styrolumsatz von etwa 30 % werden 1000 ml Styrol zudosiert, in welchem 650 g Graphit mit einer mittleren Partikelgröße von 75 µm (KP 99,5; Graphitwerk Kropfmühl), suspendiert sind. Nach weiteren 30 Minuten wird 1,8 g Emulgator K 30 (Bayer AG) zugegeben. Nach weiteren 30 Minuten wird 1,60 kg Pentan nachdosiert und bei 125°C auspolymerisiert. Die erhaltenen treibmittelhaltigen Polystyrolperlen werden abdekantiert, gewaschen und getrocknet. Sie werden nach üblichem Verfahren zu Schaumpartikeln verschäumt, die zu einem Schaumstoffblock der Dichte von 10 g/l versintert werden. Die mittlere Zellgröße beträgt 300 µm, der Offenzelligkeitsgrad etwa 20 %.

### Beispiel 2

In 18,4 kg Styrol werden 61,0 g Dicumylperoxid, 40,0 g Dicumyl, 15 g Hexabromcyclododecan und 20,2 g Dibenzoylperoxid gelöst. Die organische Phase wird in 20,0 1 vollentsalztes Wasser in einem 50 1 Rührkessel eingebracht. Die wäßrige Phase enthält 35,0 g Natriumpyrophosphat und 70,0 g Magnesiumsulfat (Bittersalz). Man erhitzt die Suspension auf 80°C. Nach 110 Minuten werden 1000 ml Styrol zudosiert. Das Styrol enthält 650 g silylierte Glasfasern (Faserdurchmesser circa 3 µm. Faserlänge ca. 100 µm), d.h. 3 % bezogen auf die gesamte organische Phase. Nach weiteren 30 Minuten wird 1,8 g Emulgator K 30 (Bayer AG)zugegeben. Nach weiteren 30 Minuten wird 1,60 kg Pentan nachdosiert und bei 130°C auspolymerisiert. Die entstandenen EPS-Partikel werden wieder zu einem offenzelligen Schaumstoff verarbeitet.

## Patentansprüche

1. Offenzellige Polystyrol-Partikelschaumstoffe mit einer Polymermatrix aus Homopolystyrol oder einem Styrolcopolymerisat mit bis zu 20 Gew.-% an ethylenisch ungesättigten Comonomeren, mit einer Dichte von 5 bis 50g/l, einer mittleren Zellgröße von 50 bis 1000 µm und einen Offenzelligkeitsgrad von 5 bis 100 %, erhältlich durch Verschäumen und Versintern von teilchenförmigen, expandierbaren Styrolpolymerisaten (EPS-Partikel), die 1 bis 25 Gew.-% eines Feststoffs enthalten, der in Wasser und in Kohlenwasserstoffen mit 4 bis 10 C-Atomen unlöslich ist, **dadurch gekennzeichnet, daß** der Feststoff eine mittlere Teilchengröße von mehr als 50 µm bis 200 µm hat.

2. Offenzellige Polystyrol-Partikelschaumstoffe nach Anspruch 1, **dadurch gekennzeichnet, dass** der Feststoff hydrophobierte Silikate, hydrophobierte Glasfasern, Kunststoffharze, hydrophobe Metallpigmente, hydrophobe Metalloxide oder Graphitpartikel sind.

3. Offenzellige Polystyrol-Partikelschaumstoffe, **dadurch gekennzeichnet, dass** der mittlere längste Teilchendurchmesser des Feststoffs 80 µm bis 160 µm beträgt.

4. Offenzellige Polystyrol-Partikelschaumstoffe nach einem der Ansprüche 1 bis 3, **dadurch gekennzeichnet, daß** sie nicht evakuiert sind.

5. Offenzellige Polystyrol-Partikelschaumstoffe nach einem der Ansprüche 1 bis 4, **dadurch gekennzeichnet, daß** sie eine Dichte von 10 bis 25 g/l aufweisen.

6. Offenzellige Polystyrol-Partikelschaumstoffe nach einem der Ansprüche 1 bis 5, **dadurch gekennzeichnet, daß** sie eine mittlere Zellgröße von 80 bis 500µm aufweisen.

7. Offenzellige Polystyrol-Partikelschaumstoffe nach einem der Ansprüche 1 bis 6, **dadurch gekennzeichnet, daß** sie einen Offenzelligkeitsgrad von 20 bis weniger als 70 % aufweisen.

## Revendications

1. Mousses à base de particules de polystyrène à alvéoles ouvertes comportant une matrice polymère à base d'homopolystyrène ou d'un copolymère de styrène avec jusqu'à 20 % en poids de comonomères éthyléniquement insaturés, présentant une densité de 5 à 50 g/l, une taille moyenne des alvéoles de 50 à 1000 µm et un degré d'alvéoles ouvertes de 5 à 100 %, que l'on peut obtenir par expansion et agglomération de polymères de styrène expansibles, en forme de particules (particules d'EPS), qui contiennent 1 à 25 % en poids d'une substance solide qui est insoluble dans l'eau et dans des hydrocarbures comportant 4 à 10 atomes de C, **caractérisées en ce que** la substance solide présente une taille moyenne des particules de plus de 50 µm jusqu'à 200 µm.

2. Mousses à base de particules de polystyrène à alvéoles ouvertes suivant la revendication 1, **caractérisées en ce que** la substance solide est à base de silicates rendus hydrophobes, de fibres de verre rendues hydrophobes, de résines synthétiques, de pigments métalliques hydrophobes, d'oxydes métalliques hydrophobes ou de particules de graphite.

3. Mousses à base de particules de polystyrène à alvéoles ouvertes, **caractérisées en ce que** le diamètre moyen le plus long des particules de la substance solide est de 80 µm à 160 µm.

4. Mousses à base de particules de polystyrène à alvéoles ouvertes suivant l'une des revendications 1 à 3, **caractérisées en ce qu'**elles ne sont pas soumises à un vide.

5. Mousses à base de particules de polystyrène à alvéoles ouvertes suivant l'une des revendications 1 à 4, **caractérisées en ce qu'**elles présentent une densité de 10 à 25 g/l.

6. Mousses à base de particules de polystyrène à alvéoles ouvertes suivant l'une des revendications 1 à 5, **caractérisées en ce qu'**elles présentent une taille moyenne des alvéoles de 80 à 500 µm.

7. Mousses à base de particules de polystyrène à alvéoles ouvertes suivant l'une des revendications 1 à 6, **caractérisée en ce qu'**elles présentent un degré d'alvéoles ouvertes de 20 à moins de 70 %.

## Claims

1. An open-cell molded polystyrene foam having a polymer matrix composed of homopolystyrene or of a styrene copolymer with up to 20% by weight of ethylenically unsaturated comonomers, with a density of from 5 to 50 g/l, an average cell size of from 50 to 1000 µm, and an open-cell content of from 5 to 100%, obtainable by foaming and sintering of expandable polystyrene beads (EPS beads) which comprise from 1 to 25% by weight of a solid which is insoluble in water and in hydrocarbons having from 4 to 10 carbon atoms, wherein the solid has an average particle size of from above 50 µm to 200 µm.

2. The open-cell molded polystyrene foam according to claim 1, wherein the solid is hydrophobicized silicates, hydrophobicized glass fibers, polymer resins, hydrophobic metallic pigments, hydrophobic metal oxides or graphite particles.

3. An open-cell molded polystyrene foam, wherein the average longest particle diameter of the solid is from 80 µm to 160 µm.

4. The open-cell molded polystyrene foam according to any of claims 1 to 3, which has not been evacuated.

5. The open-cell molded polystyrene foam according to any of claims 1 to 4, which has a density of from 10 to 25 g/l.

6. The open-cell molded polystyrene foam according to any of claims 1 to 5, which has an average cell size of from 80 to 500 µm.

7. The open-cell molded polystyrene foam according to any of claims 1 to 6, which has an open-cell content of from 20 to below 70%.
